# EUROPÄISCHE PATENTSCHRIFT

(11) **EP 2 057 293 B1**
(45) Veröffentlichungstag und Bekanntmachung des Hinweises auf die Patenterteilung: **23.02.2011**
(21) Anmeldenummer: 07788376.7
(22) Anmeldetag: 13.08.2007
(51) Int. Cl.: C14C 11/00, C09D 175/04, C08G 18/70, C08K 7/22

(54) **ZUGERICHTETES LEDER**
DRESSED LEATHER
CUIR CORROYÉ

(30) Priorität: 22.08.2006 DE 102006039261
(43) Veröffentlichungstag der Anmeldung: 13.05.2009
(73) Patentinhaber: LANXESS Deutschland GmbH, 51369 Leverkusen (DE)
(72) Erfinder: VORLÄNDER, Otto, 57271 Hilchenbach (DE); REINERS, Jürgen, 51373 Leverkusen (DE)
(86) Internationale Anmeldenummer: PCT/EP2007/058346
(87) Internationale Veröffentlichungsnummer: WO 2008/022936

(56) Entgegenhaltungen:
- US-A1- 2003 194 565
- US-A1- 2005 025 952
- US-B1- 6 303 665

## Beschreibung

Die Erfindung betrifft zugerichtete Leder, Verfahren zu ihrer Herstellung, unter anderem gekennzeichnet durch Auftragen einer Grundierung, die Grundierung als solche sowie ein System zur Herstellung solcher Grundierungen und deren Verwendung zum Aufwerten von minderwertigen Ledersortimenten, insbesondere Vollnarbenleder mit schweren Oberflächendefekten.

Unter Upgrading wird die Aufwertung von Ledern verstanden, deren Narbenseite Oberflächendefekte wie Kratzer, Abziehfehler, Wundnarben, Insektenstiche oder andere Beschädigungen durch mechanische Einwirkungen während der Viehhaltung wie z.B. Verletzungen durch Stacheldraht, aufweisen.

Crustleder, also unzugerichtetes Leder, mit Narbendefekten erzielen in der Regel einen niedrigen Verkaufswert. Eine wesentliche Aufwertung von Ledern mit größeren Defekten ist dadurch erreichbar, dass man die Oberflächendefekte mit einer dicken Zurichtschicht kaschiert. Je nach Art der Defekte wird nach dem Stand der Technik eine mehrstufige Korrektur durch Schleifen, Stuckiermassen, gut deckende Grundierungen und Topcoats erreicht. Nach dem Grundieren kann das gewünschte Narbenbild durch Prägung erreicht werden. Abschließend wird der Topcoat gespritzt, damit die Leder die geforderten Echtheiten aufweisen.

Es hat nicht an Versuchen gefehlt, Leder mit Narbenfehlern zu korrigieren. Eine bekannte Methode dazu ist die Applikation einer Schaumzurichtung bspw. In US-A-6.541.528 und US-A-6.303.665. Mit dieser Methode können hohe Auftragsmengen bereits mit einer einzigen Applikation realisiert werden. Die erreichbaren Schaumdichten hängen von der Zusammensetzung des Schaumes ab und liegen im Bereich von 500-800 g/Liter. Eine Übersicht über die für die Schaumzurichtung wichtigen Parameter findet sich bspw. in W.Löbig in JSLTC 81, 1-4 (1997) ("foam systems- a novel Type of foam finishing")

Nach der Applikation des Schaums und der Trocknung wird die gewünschte Narbenstruktur aufgeprägt. Auf die geprägte Oberfläche wird dann in der Regel ein Topcoat gespritzt.

Nachteile der bekannten Schaumzurichtungen sind das niedrige Litergewicht und die relativ hohe Auftragsmenge zur Kaschierung von Defekten. Dadurch leidet der Griff, insbesondere die Weichheit der zugerichteten Leder und der optische Eindruck. Im allgemeinen besteht daher weiterhin Bedarf an Ledern, die dem natürlichen Vorbild optisch und in den haptischen Eigenschaften möglichst nahe kommen.

In US 6.953.621 B2 werden gemillte Vollnarben-Nappaleder beschrieben, auf deren Narbenseite nach dem Millen in einem einzigen Auftrag eine Zurichtschicht enthaltend Mikrohohlkugeln mit einem Durchmesser kleiner als 45 µm aufgespritzt wird. Die Dicke der verfestigten KunststoffDispersion beträgt dabei 0,02 bis 0,07 mm. Die Mikrohohlkugeln bestehen zumindest anteilig aus Polyvinylidenchlorid-Kapseln. Ähnliches wird in WO-A-2005/035795 oder US-A-2003/0198822 beschrieben. Die Leder weisen u.a. den Nachteil auf, dass die Oberfläche matt wirkt und bei schrägem Lichteinfall grau aussieht.

In der DE 20319971 U 1 werden Leder mit einer porösen Zurichtschicht beschrieben, die über eine Umkehrbeschichtung auf das Leder mittels einer Verbindungsschicht aufgebracht wird. Diese Verbindungsschicht enthält vorzugsweise Mikrohohlkugeln. Diese Leder werden insbesondere für Schuhmaterialien mit einer hohen Wasserdampfdurchlässigkeit eingesetzt. Diese Methode erfordert eine separate Herstellung der die Mikrokugeln enthaltenden Deckschicht mit anschließender Verklebung der gegebenenfalls stukkierten Leder.

Trotz der erwähnten Fortschritte besteht weiterhin Bedarf an Verbesserungen hinsichtlich der optischen und haptischen Eigenschaften.

Die vorliegende Erfindung stellt sich die Aufgabe, die erwähnten Nachteile zu vermeiden und ein hochwertiges Leder oder ein lederähnliches Material zu erzeugen, bei dessen Herstellung insbesondere auch sehr stark beschädigtes Rohmaterial eingesetzt werden kann, das bspw. mit einem einfachen oder zweifachen Auftrag eines Grundierbinders, anschließende Prägung und danach durch Auftrag eines Topcoats in der endgültigen Form vorliegen soll, einen sehr natürlichen Aspekt hat und eine deshalb eine den Narben nur sehr wenig belastende Zurichtschicht aufweist, dennoch aber alle Defekte sicher nivelliert.

Die Erfindung betrifft daher ein zugerichtetes mit einer Grundierung versehenes flächiges Substrat, wobei das flächige Substrat Leder oder Kunstleder, insbesondere ein mit einer Grundierung versehenes gegebenenfalls Narbenfehler aufweisendes Vollnarbenleder oder ein Spaltleder oder ein Kunstleder ist, wobei die Oberfläche der Zurichtung mit einem vorzugsweise matten Oberflächenfinish versehen ist, dadurch gekennzeichnet, dass die Grundierung der Zurichtung durch mindestens eine verfestigte Polymer-Dispersion mit einer Schaumstruktur gebildet ist, in welche zusätzliche Mikrohohlkugeln eingebettet sind, deren Hülle vorzugsweise eine Wandstärke von weniger als 2 µm aufweist, und der vorzugsweise matte Oberflächenfinish mindestens eine verfestigte und vernetzte Polymerdispersion enthält, mit der Maßgabe, dass der mittlere Durchmesser der Hohlräume der Schaumstruktur der Grundierung kleiner ist als der mittlere Durchmesser der Hohlräume, die durch die expandierten Mikrohohlkugeln gebildet werden.

Die Erfindung betrifft weiterhin ein Verfahren zur Herstellung des erfindungsgemäßen zugerichteten flächigen Substrates, das Leder oder Kunstleder ist, das dadurch gekennzeichnet ist, dass man
- eine aufgeschäumte Grundierung, enthaltend wenigstens eine verfestigbare Polymer-Dispersion (Binder), Schaummittel, Wasser und Mikrohohlkugeln auf ein flächiges Substrat, das Leder, insbesondere Spaltleder oder Kunstleder ist, aufträgt, wobei die geschäumte Grundierung eine Dichte von 0,3-0,9 g/l aufweist,
- das beschichtete Substrat trocknet,
- gegebenenfalls auf das getrocknete Substrat auf der beschichteten Seite ein Muster prägt und
- auf die gegebenenfalls geprägte Oberfläche ein Oberflächenfinish (Topcoat), enthaltend wenigstens eine verfestigbare Polymerdispersion aufträgt und das zugerichtete Substrat trocknet.

Bevorzugte Substrate für die Zurichtung sind vorzugsweise Leder, insbesondere Crustleder. Die Falzstärke der Leder beträgt in der Regel 0,8 bis 2,5 mm. Es sind aber auch Leder mit niedrigerer oder höherer Dicke einsetzbar.

Die eingesetzte Grundierung enthält Binder, Schaummittel, Mikrohohlkugeln und Wasser und ist in der nachstehenden besonders bevorzugten Zusammensetzung ebenfalls Gegenstand dieser Erfindung.

Besonders bevorzugt enthält sie
1 bis 30 %, bevorzugt 4 bis 25 %, besonders bevorzugt 10 bis 20 % Binder,
0,1 bis 4 % Schaummittel
0,1 bis 2 % Mikrohohlkugeln
0,01 bis 10 % Pigment
0,1 bis 30 % Füllmittel
0 bis 0,2 % Verlaufshilfsmittel
0 bis 0,2 % Verdicker
0 bis 0,2 % Vernetzer
0 bis 0,7 % Mattierungsmittel
und Wasser, wobei die Summe aller Komponenten stets 100 % ergibt.

Die Prozentangaben beziehen sich jeweils auf den Feststoff bzw. Wirkstoff der entsprechenden Inhaltsstoffe.

Geeignete Binder sind Polymerdispersionen aus der Gruppe der Polyacrylate, der Polybutadien-Copolymere und der Polyurethane.

Besonders bevorzugte Binder sind **Polyurethan-Dispersionen**, die aus folgenden Bausteinen erhältlich sind:
1) einem oder mehreren Polyisocyanaten
2) einem oder mehreren Polyolen auf Basis von Polyethern, Polyestern, Polycarbonaten, Polyestercarbonaten, Polyethercarbonaten mit einem Molmasse von 500 bis 12000g/mol und mit einer Funktionalität von 2
3) einem oder mehreren, von 2) verschiedenen Polyolen mit einer Funktionalität größer oder kleiner 2
4) kurzkettige Polyole mit einer Funktionalität von 1 bis 4
5) ionische Gruppen aufweisenden kurzkettigen Polyolen
6) einem oder mehreren aminofunktionellen Verbindungen, die auch ionische Gruppen tragen können,
7) gegebenenfalls einem Blockierungsmittel zur Verkappung noch freier Isocyanatgruppen
8) Neutralisationsmitteln und
9) Wasser.

Geeignete Polyisocyanate 1) sind bevorzugt Diisocyanate wie 1,6-Hexamethylendiisocyanat, Isophorondiisocyanat, Bis (Isocyanatocyclohexyl)methan, sowie die Di- und Trimerisate der vorgenannten Diisocyanate, wobei letztere vorzugsweise eine NCO-Funktionalität größer 2 aufweisen.

Geeignete Polyole 2) sind Polyether, wie Poly(oxypropylen)-diole, Poly(oxyethylen)-diole mit einer Molmasse von 500 bis 12000 g/mol, vorzugsweise einer Molmasse von 500 bis 4000 g/mol, besonders bevorzugt mit einer Molmasse von 500 bis 2500 g/mol, Pol(tetrahydrofuran)-diole einer Molmasse von 200 bis 4000 g/mol, Mischpolyether aus EO und PO sowie statistische oder Block-Copolyether vom Typ der Polytetrahydrofuran-Ethylenoxid-Copolyether, Polytetrahydrofuran-Propylenoxid-Copolyether, Polytetrahydrofuran-Ethylenoxid-Propylenoxid, wobei die Blöcke der Monomereinheiten untereinander unterschiedlich angeordnet sein können, das heißt eine AB-Struktur, ABA-Struktur, BAB-Struktur, A-random (B+C)-A etc aufweisen können. Solche Rohstoffe sind dem Fachmann an sich bekannt und handelsüblich.

Geeignete Polyole 3) sind beispielsweise Polyether, die durch Umsetzung mehrwertiger Alkohole mit einer Funktionalität größer 2 wie Trimethylolpropan, Pentaerythrit, Glycerin, Sorbit etc. mit Alkylenoxiden wie Ethylenoxid, Propylenoxid, Butylenoxid und Mischungen daraus erhältlich sind.

Geeignete Polyole 4) sind lineare oder verzweigte Monoalkohole wie Ethanol, Propanol, Isopropanol, Butanol, Isobutanol, Pentanol, Hexanol, 2-Ethylhexanol, Octanol, bis zum C30-Alkohol.

Geeignete Polyole 4) sind weiterhin Diole wie Ethandiol, Propandiol, Butandiol, Hexandiol, Bis(2-hydroxyethoxy)-benzol, Bis-2,2-[4-(2-hydroxyethoxy)-phenyl]-propan, Bis-hydroxymethyltricyclo[5.2.1.0^{2,6}]decan.

Geeignete Polyole 4) sind trifunktionelle Alkohole wie Trimethylolpropan, Glycerin, 1,1,1-Tris (2-hydroxyethoxy-methyl)-propan, usw. Geeignete Polyole 4) mit einer OH-Funktionalität von 4 und höher sind beispielsweise Pentaerythrit, Sorbit, Gluconolacton, Polyglycerin etc..

Geeignete ionische Gruppen aufweisende Polyole 5) sind Dimethylolpropionsäure, Dihydroxybuttersäure, Dimethylolbuttersäure, Weinsäure, Sulfogruppen enthaltende Diole wie Addukte von Natriumdisulfit an propoxyliertes Butendiol-1,4.

Geeignete aminofunktionelle Verbindungen 6) sind Ethylendiamin, Isophorondiamin, Bis(aminocyclohexyl)methan, N-(2-Aminoethyl)2-aminoethan-1-sulfonsäure und deren Alkali-Salze, N-(2-Aminoethyl)2-aminoethan-1-carbonsäure, Michael-Addukte von Acrylsäure an Isophorondiamin, Cyanamid, Diethylentriamin, Aminoethanol, Diethanolamin.

Geeignete Blockierungsmittel 7) können sein Butanonoxim, Dimethylpyrazol, Pyrazol, Caprolactam, Natriumhydrogensulfit, Acetylaceton, Malonsäurediethylester.

Geeignete Neutralisationsmittel 8) sind beispielsweise Triethylamin, N,N-Dimethyl-aminoethanol, Tripropylamin, N-Methyl-bis(2-hydroxyethyl)-amin, Diethyl-aminoethanol, Tris(2-hydroxyethyl)amin.

Die Verfahren zur Herstellung von Polyurethan-Dispersionen sind an sich bekannt.

Sie sind beispielsweise durch Schmelze-Dispergierverfahren, Aceton-Verfahren etc. zugänglich. Eine Übersicht der Herstellungsverfahren ist zum Beispiel in Houben-Weyl, Methoden der Organischen Chemie, Band E 20, Makromolekulare Chemie, G.Thieme Verlag, Stuttgart, 1987 (Seite 1659 bis 1681) beschrieben.

Besonders geeignet als filmbildende Komponente für den Einsatz in Grundierungen sind Polyurethan-Dispersionen, deren Filme eine Shore A-Härte über 30 aufweisen. Die Einstellung der Härte Shore A durch Veränderung der Reaktanden und die Einstellung der stöchiometrischen Verhältnisse der Reaktanden sowie die Reaktionsparameter zur Reaktionsführung sind dem Fachmann bekannt.

Geeignet sind auch Mischungen verschiedener Polyurethan-Dispersionen, um die gewünschte Shore-Härte A (gemessen an Filmen) von größer 30 und bestimmte Eigenschaften wie Zugfestigkeit, E-Modul, Trocken- und Nass-Haftung etc., die von Lederartikel zu Lederartikel und je nach Anwendungsziel variieren können, einzustellen. Im Handel sind daher eine große Anzahl von wässrigen Polyurethan-Dispersionen für die Lederzurichtung.

Ganz besonders bevorzugt sind solche Polyurethan-Dispersionen, die keine Lösemittel wie NMP oder andere Colöser enthalten, die manchmal zur Verbesserung der Filmbildung eingesetzt werden, beispielsweise Propylenglykoldiacetat, Methoxyproylpacetat, Methoxypropanol, Ethoxyethyl-acetat, Ethoxyethanol usw.

Geeignete Binder für Grundierungen sind weiterhin solche auf Basis von **Polyacrylat-Dispersionen.**

Die Herstellung von Polyacrylat-Dispersionen erfolgt in der Regel durch Lösungs- oder Emulsionscopolymerisation.

Diese ist beispielsweise bekannt als: US-A 5 221 284, US-A 5 376 459.

Bevorzugte Polyacrylate besitzen ein Molekulargewicht von 10.000 bis 1.000.000 g/Mol.

Besonders bevorzugt sind Polyacrylat-Dispersionen, die ausgewählt aus wenigstens einem der folgenden Monomeren durch radikalische Copolymerisation erhältlich sind.
1) Acrylsäure und Methacrylsäure und deren Derivate der Formel CH₂=CR¹-CO-OR², wobei R¹ für Wasserstoff oder Methyl steht und R² für einen Kohlenwasserstoffrest mit 1 bis 40 C-Atomen steht, der auch durch Fluor, Hydroxy, C₁₋₄-Alkylamino, C₁₋₄-Alkoxy, Carbonyl-Gruppen sowie Polyethergruppen substituiert sein kann,
2) Acrylsäureamid, Methacrylamid und deren Derivate,
3) Styrol und substituierte Styrole,
4) Acrylnitril,
5) Vinylester wie Vinylacetat, Vinylpropionat und/oder
6) Ungesättigte Dicarbonsäuren wie Crotonsäure, Haconsäure oder Maleinsäureanhydrid.

Geeignete Binder sind auch Mischungen von Polyacrylat- und Polyurethan-Dispersionen oder Dispersionen, die durch Pfropfung von Acrylatcomonomeren auf Polyurethan-Dispersionen (PUR-PAC-Hybride) erhalten werden, mit der Maßgabe, dass sie eine zur Herstellung von Grundierungen angemessene Härte Shore A aufweisen und ggf. mit üblichen Vernetzern vernetzbar oder selbstvernetzend sind.

Bevorzugte erfindungsgemäßen Grundierungen enthalten mehr als 85 %, insbesondere mehr als 90 %, bevorzugt mehr als 95 %, besonders bevorzugt mehr als 98 % der Komponenten Binder, Schaummittel, Mikrohohlkugeln, Pigmente, Füllstoffe und Wasser.

Geeignete Schaummittel sind beispielsweise anionische Tenside oder diese enthaltende Formulierungen, die sich zum Aufschäumen von Bindermischungen eignen. Besonders bevorzugte anionische Tensidformulierungen sind Lepton Filler AF (20% ig) (BASF), Stokal STR , Stokal STA (Stockhausen).

Die eingesetzten Mikrohohlkugeln bestehen vorzugsweise aus einem thermoplastischen, gasdichten Polymer-Hohlkörper, der im nicht expandierten Zustand mit einem Kohlenwasserstoff wie beispielsweise Isobutan gefüllt ist. Beim Erhitzen wird die Hülle weich und vom Kohlenwasserstoff aufgebläht. Die Mikrohohlkugeln bleiben bei der Expansion größtenteils erhalten. Ein kleiner Anteil kann während der Expansion auch bersten. Ein Teil des Kohlenwasserstoffs entweicht dabei. Bevorzugte Mikrohohlkugeln besitzen eine Hülle, die bevorzugt aus Polyvinylidenchlorid oder Copolymerisaten aus Vinylidenchlorid mit Acrylnitril, Methylmethacrylat oder Styrol besteht.

Die Hohlkugeln weisen im nicht expandierten Zustand vorzugsweise eine mittlere Teilchengröße von 2 bis 45 µm auf. Die Wandstärke der Hülle beträgt vorzugsweise 1 bis 7 µm.

Mikrohohlkugeln mit einem Durchmesser von 10 bis 12 µm werden beispielsweise durch Erhitzen auf eine mittlere Teilchengröße von 40 µm expandiert, wobei die Dichte aufgrund der Expansion der Kugeln von 1000-1200 g/Liter auf 30-40 g/Liter abfällt.

Geeignete Mikrohohlkugeln sind an sich bekannt. Eine Beschreibung geeigneter Mikrohohlkugeln ist zum Beispiel der DE 3117721 zu entnehmen. Bekannt sind zum Beispiel Mikrohohlkugeln auf Polyvinylidenchlorid-Basis, die unter der Bezeichnung Expancel 642 WU 40, Expancel 820 WU 40 oder Expancel 551 WU 40 (Akzo, Expancel, Sundsvall, Sweden) kommerziell erhältlich sind und eine mittlere Teilchengröße 10-16 µm aufweisen. Weiterhin geeignet sind die unter der Bezeichnung Dualite (UCB) erhältlichen Mikrohohlkugeln. Nicht expandierte Mikrohohlkugeln werden als frei fließende Pulver oder als Slurry angeboten. Bereits expandierte Mikrohohlkugeln, die ebenfalls als Pulver oder als Slurry kommerziell verfügbar sind, sind zur Lösung der erfindungsgemäßen Aufgabe ungeeignet.

Als Additive eingesetzte Pigmente sind vorzugsweise anionische Pigmente geeignet. Als anionische Pigmente sind solche vom Typ der Euderm^{®} Farben B/C der Fa. Lanxess Deutschland GmbH besonders geeignet.

Geeignete Verlaufshilfsmittel sind beispielsweise Polyethersiloxane. Es ist jedoch bevorzugt, in der Grundierung keine Verlaufshilfsmittel einzusetzen. Es ist weiterhin vorteilhaft, wenn die Grundierungen eine hohe Oberflächenspannung aufweisen, da das Eindringen der Schaumgrundierung in das Crustleder verringert wird.

Verlaufhilfsmittel sind beispielsweise spezielle polyethermodifizierte Polydimethylsiloxane wie AQUADERM^{®} Fluid H (LANXESS Deutschland GmbH). Geeignete Polyethersiloxane sind zum Beispiel in der EP-A-0318751 (Seite 3, Zeile 28 bis Seite 4, Zeile 11) erwähnt. Weitere Polyethersiloxane sind dem Fachmann an sich bekannt und handelsüblich.

Geeignete Verdicker sind an sich bekannt und handelsüblich. Beispielhaft seien Produkte auf Polyacrylsäure-Basis genannt wie Acrysol^{®} RM 825 (Rohm and Haas).

Geeignete Vernetzer, die in der Grundierung eingesetzt werden, sind dem Fachmann bekannte Vernetzer vom Typ der Carbodiimide. Diese sind kommerziell verfügbar wie beispielsweise Bayderm^{®} Fix UCL (Lanxess Deutschland GmbH).

Mattiermittel sind zum Beispiel silicathaltige oder silicatfreie, auf organischen Nanopartikeln basierende Formulierungen zur Einstellung des Glanzes bzw. des Mattgrades.

Geeignete Mattiermittel sind z.B. amorphe pyrogene Kieselsäuren, sphärische Partikel auf Basis von Silicaten oder Polysilsesquioxanen. Die Silica-Partikel können als solche vorliegen oder durch eine Oberflächenbehandlung mit zum Beispiel Organosilanen modifiziert sein. Auch organische Partikel wie vernetzte oder unvernetzte käufliche Microbeads auf Polyacrylatbasis, die monodispers zugänglich sind, oder Microbeads auf Basis von Polyurethan-Fällungsdispersionen, die in der Regel eine gegenüber den Polyacrylaten etwas breitere Teilchengrößenverteilung aufweisen, sind vorteilhaft zur Mattierung geeignet. Besonders bevorzugt sind wässrige Produkte oder Mattiermittel, die sich ohne Agglomeratbildung in der Beschichtungsformulierung direkt einarbeiten lassen oder als wässriges Konzentrat eindispergieren lassen. Es handelt sich bei den Mattiermitteln daher oftmals bereits um wässrige Formulierungen, die als Konzentrat nach Bedarf in die Zurichtformulierung gegeben werden. Die darin enthaltenen Mattiermittel haben bspw. eine mittlere Teilchengröße von 5 bis 50 µm, vorzugsweise 5-25 µm.

Als Füllmittel kommen vorzugsweise wässrige Formulierungen mit hydrophoben Bestandteilen wie Wachsen, Ölen wie Klauenöl, Fetten, Paraffinen, langkettige Fettalkoholen und üblichen Hilfsmitteln zur Stabilisierung der wässrigen Dispersionen sowie den oben genannten Mattiermitteln in Frage. Beispielsweise Euderm^{®} Nappa Soft S der Firma Lanxess Deutschland GmbH.

Die geschäumte Grundierung wird vorzugsweise dadurch hergestellt, dass man die Grundierungsformulierung durch ein Schaumaggregat (Typ Hansa Mix oder Gemata) pumpt und eine kontrollierte Menge Luft zuführt. Es werden dabei geschäumte Grundierungen eingesetzt, die eine Dichte von 0,3 bis 0,9 kg/Liter aufweisen. Dichten unter 0,6 kg/Liter führen bei Standardschaumgrundierung ohne Mikrohohlkugeln bereits zu Problemen bezüglich der Knickechtheiten des resultierenden Leders, während bei Mikrohohlkugeln enthaltenden Grundierungen auch niedrigere Schaumdichten bis zu 0,3 kg /Liter erreichbar sind.

Der Auftrag der Grundierung auf das Substrat kann auf verschiedene Weisen erfolgen.

Als Auftragsmethoden eignen sich die üblichen Applikationstechniken wie Gießen, Spritzen, Plüschen, oder direkte und indirekte Walzenauftragsverfahren wie Roll-Coating, Reverse-Roll-Coating etc. Besonders bevorzugt ist bei der Lederzurichtung der Auftrag mittels Spritzpistolen und Spritzmaschinen.

Als Auftragsaggregate für die Schaumgrundierung eignen sich Airless-Spritzpistolen, HVLP-Spritzpistolen oder Revers-Coating-Walzenauftragsverfahren. Bevorzugt sind Durchlauf-Spritzmaschinen. Der Auftrag erfolgt vorzugsweise bei 10 bis 50°C, besonders bevorzugt bei 15 bis 30°C.

Die Schaumgrundierung hat zum Zeitpunkt des Auftrags eine Temperatur von 10 bis 40°C, besonders bevorzugt von 15 bis 30°C.

Die Auftragsmenge nass beträgt vorzugsweise 0,5 bis 50 g/ft², bevorzugt 5 bis 15 g/ft², besonders bevorzugt 7 bis 10 g/ft². Es werden vorzugsweise nicht mehr als max. 2 Aufträge gespritzt, wobei nach jedem Durchgang vorzugsweise eine Zwischentrocknung erfolgt. Die Trockenauftragsmenge beträgt vorzugsweise 0,5 bis 5 g/sqft.

Die Trocknungstemperatur liegt im Bereich zwischen 70 und 150°C, bevorzugt im Bereich zwischen 80 und 120°C. Zur Trocknung geeignete Aggregate sind bevorzugt Flachbandtrockner oder einfache Trockenkammern. Die Trocknung erfolgt in den üblichen Trockenkanälen mittels Heißluftzufuhr oder mittels Infrarot-Trocknungseinheiten oder der Kombination aus beiden Aggregaten. Besonders bevorzugt sind die in der Praxis üblichen Trockenkanäle mit einer in unterschiedliche Temperaturzonen eingeteilten Trockenbereichen, deren Trockenleistung sich an die jeweiligen Erfordernisse (Temperatur, Bandgeschwindigkeit, Wassergehalt der Grundierung, Stapelbarkeit der Leder) anpassen lässt. Es ist vorteilhaft, dass ein Teil der Mikrohohlkugeln bereits während des Trocknungsprozesses expandiert.

In der Praxis werden Tandemtrockner eingesetzt, die in der Regele eine Länge von 40 bis 50 Meter haben. Die Trocknungstemperatur im Bereich zwischen 60 und 130°C , vorzugsweise zwischen 70 und 100°C, besonders bevorzugt zwischen 80 bis 90°C. Die Verweilzeit im Kanal richtet sich nach der eingestellten Trocknungstemperatur und der Bandgeschwindigkeit. Letztere beträgt beispielsweise 5 bis 15 Meter pro Minute, bevorzugt 8 bis 12 Meter pro Minute. Als Verweilzeit ergeben sich beispielsweise bei 85°C 2 bis 10 Minuten, bevorzugt zwischen 2 und 5 Minuten.

Die Prägung der Leder erfolgt bevorzugt in Durchlaufprägemaschinen. Beispiele für solche Prägemaschinen sind z.B solche vom Typ Rotopress. Hydraulische Pressen sind zur weiteren Expansion der in der erfindungsgemäßen Schaumgrundierungen enthaltenen Mikrohohlkugeln nicht geeignet. Geeignet sind Prägetemperaturen im Bereich zwischen 80 und 150°C, besonders bevorzugt zwischen 80 und 130°C, und je nach gewünschter Prägetiefe und gewünschtem Narbenbild Prägedrücke von 50 bis 150 bar. Beispielhaft beträgt die Bandgeschwindigkeit bei 110°C und 120 bar Anpressdruck ca. 7 Meter pro Minute.

Die erfindungsgemäße Grundierschicht hat nach der Prägung und der dabei erfolgten Expansion der Mikrohohlkugeln in der verfestigten Schaummatrix eine Dichte von 0,2 bis 0,5 kg/Liter, vorzugsweise von 0,3 bis 0,4 kg/Liter.

Abschließend wird auf die geprägten Substrate ein Topcoat aufgespritzt.

Als Auftragsaggregate für den Topcoat eignen sich Airless-Spritzpistolen, HVLP-Spritzpistolen oder auch Walzenauftragsverfahren. Bevorzugt sind aber Durchlauf-Spritzmaschinen. Der Auftrag erfolgt vorzugsweise bei 10 bis 50°C, besonders bevorzugt bei 15 bis 30°C.

Der Topcoat hat zum Zeitpunkt des Auftrags eine Temperatur von 10 bis 40°C, besonders bevorzugt von 15 bis 30°C.

Die Auftragsmenge nass beträgt 0,5 bis 15 g/ft², bevorzugt 1 bis 8 g/ft², besonders bevorzugt 1 bis 4 g/ft². Es werden vorzugsweise nicht mehr als 2 Aufträge aufgetragen, wobei nach jedem Durchgang eine Zwischentrocknung erfolgt. Vorzugsweise wird nur ein Auftrag gespritzt. Besonders bevorzugt ist ein Spritzauftrag in einem Durchgang.

Geeignete Topcoats, die nach dem Prägen der Grundierung, als Oberflächenfinish appliziert werden und die für den Endgebrauch des Lederartikels geforderte Oberfläche liefern, sind Polyurethan- und Polyacrylat-Dispersionen. Bevorzugte Topcoats sind Polyurethan- und Polyacrylat-Dispersionen mit einer Shore Härte A von 60 bis 98. Diese Topcoats sind gemäß Stand der Technik in der Regel vernetzt, wenn besonders hohe Anforderungen an die Echtheiten gestellt werden. Zu erfüllende Echtheitskriterien sind beispielsweise die Knickechtheiten, die an trockenen und nassen Leder-Prüflingen getestet werden, die Nassreibechtheiten, die Taber-Abrasionsfestigkeit (mit den jeweils vorgegebenen Körnungen des Abriebkörpers und einer bestimmten Cyclenzahl). An Automobilleder werden besonders hohe Anforderungen gestellt, die ebenfalls zu erfüllen sind.

Es ist jedoch auch möglich, auf den Einsatz von Vernetzern zu verzichten, wenn z.B. geringere Anforderungen an die Echtheiten zu erfüllen sind oder die Dicke der Zurichtschicht zunimmt. Solche Leder sind beispielsweise Schuhoberleder auf Basis von Spaltledern oder Schleifbox-Zurichtungen.

Geeignete Topcoats sind die nach dem Stand der Technik bekannten Formulierungen. Wesentliche Komponenten in solchen Topcoat-Formulierungen sind Binder, Mattiermittel, Vernetzer sowie übliche Additive wie Pigmente (optional), Griffmittel, Verlaufshilfsmittel, Verdicker.

Die zur Zubereitung der Topcoats, die auf die mit der oben beschriebenen Grundierung versehenen getrockneten und geprägten Leder appliziert werden müssen, um ein gebrauchsfertiges Leder zu erhalten, bestehen im wesentlichen aus Bindern, Vernetzern und üblichen Additiven. Diese Komponenten sind handelsüblich und dem Fachmann allgemein bekannt. In der Regel sind die Additive mit den vorgenannten Additiven identisch oder werden entsprechend dem Verwendungszweck und Kundenwunsch aus bekannten Hilfsmitteln ausgewählt und/oder beliebig kombiniert.

Es ist weiterhin möglich, im Topcoat Hydrophobiermittel auf Polyacrylat-Basis oder Silicon-Wirkstoffe oder fluorhaltige Copolymerisate oder andere Polyurethan-basierte Fluorcarbonharze auf Basis von handelsüblichen Bausteinen wie OH-Gruppen haltigen Perfluoralkyl-Telomerisaten einzusetzen.

Es ist auch möglich die erfindungsgemäßen Grundierungen anteilig für Topcoats einzusetzen. Besonders bevorzugt ist der Einsatz als Grundierung.

Bevorzugt ist das zugerichtete erfindungsgemäße Substrat, das eine poröse Grundierschicht enthält, bei der die Mikrohohlkugeln auf ein Volumen expandieren, das dem mehr als 40-fachen des Volumens im nicht expandierten Zustand entspricht, und bei dem die Mikrohohlkugeln gleichmäßig in der Schaumstruktur verteilt sind und sich beim Prägen nicht an der Oberfläche anreichern, wobei die Grundierschicht vorhandene Defekte der Narbenseite vollständig abdeckt, so dass nach dem Prägevorgang eine gleichmäßige Oberfläche entsteht, bei der alle vorherigen Defekte abgedeckt werden und nicht separat behandelt werden müssen.

Die Dichte der Mikrohohlkugeln liegt während des Trocknungsvorgangs in der Regel in der Größenordnung des Schaums, so dass sie weniger stark flotieren als beim Zusatz zu einem nicht geschäumten Bindersystems. Die Expansion der Mikrohohlkugeln in Bereichen von Defekten ist um ein Vielfaches größer als in Bereichen, in denen die Narbenstruktur keine Defekte aufweist. Durch diesen nivellierenden Effekt werden nach dem Prägen Lederoberflächen erzielt, die nach einer sehr geringen Auftragsmenge an Schlussfinish gebrauchsfertig sind. Es lassen sich auf diese Weise mit äußerst wenig Binder belastete Narbenbilder und sehr elegante Vollnarbenleder mit hervorragenden Echtheiten, optischen und haptischen Eigenschaften herstellen.

Da wesentlich geringere Auftragsmengen möglich sind, ist es auch möglich, härtere Binder in der Grundierung einzusetzen, um ein mögliches Schneiden der Prägung zu vermeiden. Durch die geringen Auftragsmengen bei der Grundierung und die hohe Elastizität der Schaumstruktur lassen sich angenehm weiche Leder herstellen.

Die erfindungsgemäßen Leder können bei wesentlich niedrigeren Temperaturen geprägt werden, so dass ein Farbtonumschlag (Vergrauung der Oberfläche) vermieden wird und Leder im Vergleich zu höheren Prägetemperaturen weicher bleiben.

Vorteile der erfindungsgemäßen Methode sind, dass die gesamte Grundierung weniger tief in das Leder eindringt und somit an der Oberfläche zur Verfügung steht, eine geringere Verhärtung des Leders auftritt, geringe Auftragsmengen ausreichen, um Narbendefekte zu nivellieren, durch die Expansion der im Schaum eingelagerten Mikrohohlkugeln gegen den Kompressionsdruck beim Prägen eine hervorragende Nivellierung von Defekten erfolgt und das Prägebild auch nach Applikation des Topcoats erhalten bleibt. Die erhaltenen Leder weisen einen natürlichen weichen Griff auf und besitzen aufgrund der geringeren Applikationsmengen eine elegantere Optik als konventionell mit Schaum zugerichtete Leder.

Das erfindungsgemäße Substrat, insbesondere Leder wird vorzugsweise als Automobilleder verwendet, also zur Weiterverarbeitung des Leders für hochwertige Automobilinnenausstattungen, wie z.B. Autositze aber auch für Polstermöbel und Schuhobermaterial.

Das erfindungsgemäße System aus Mikrokapseln in einer Schaumzurichtung bringt gegenüber dem Stand der Technik (Mikrokapseln in einem Bindergemisch sowie Schaumzurichtung ohne Mikrokapseln) folgende Vorteile:

Die Mikrohohlkugeln penetrieren nicht so stark in das Leder wie es bei schaumlosen Grundierungen der Fall ist. Die Kapseln expandieren bereits bei geringeren Temperaturen von ca. 100°C, während in schaumlosen Grundierungen ca. 130°C benötigt werden. Geringere Temperaturen verhindern auch das Versteifen von Leder.

Es wird außerdem ein deutlich geringerer Farbtonumschlag der Zurichtung erreicht. Außerdem ist weniger Schaumauftrag zur Behebung der gleichen Narbenfehler gegenüber den schaumlosen Grundierungen notwendig.

Die erfindungsgemäßen Eigenschaften können durch REM-Aufnahmen an Leder-Querschnitten gezeigt werden. Die Leder, die eine Zurichtschicht enthalten, die durch Einlagerung von Kapseln in die Schaumstruktur entstanden ist, unterscheiden sich danach deutlich von Ledern, die mit bekannten Methoden zugerichtet wurden. Zur Veranschaulichung seien folgende Lederproben aufgeführt:

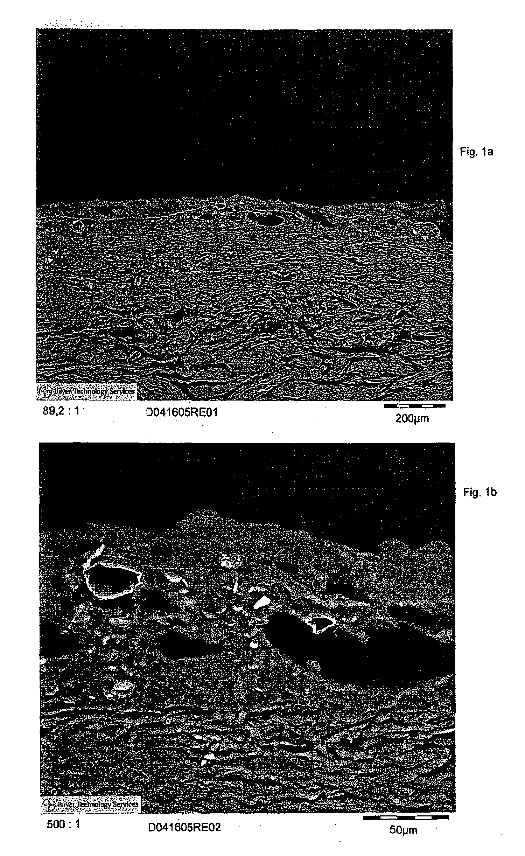

- **Fig 1a**: REM-Aufnahme des Leder-Querschnitts aus Beispiel 1, jedoch mit 90°C Prägetemperatur, Vergrößerung 89,2:1
- **Fig 1b**: REM-Aufnahme des Leder-Querschnitts aus Beispiel 1, jedoch mit 90°C Präge- temperatur, Vergrößerung 500:1

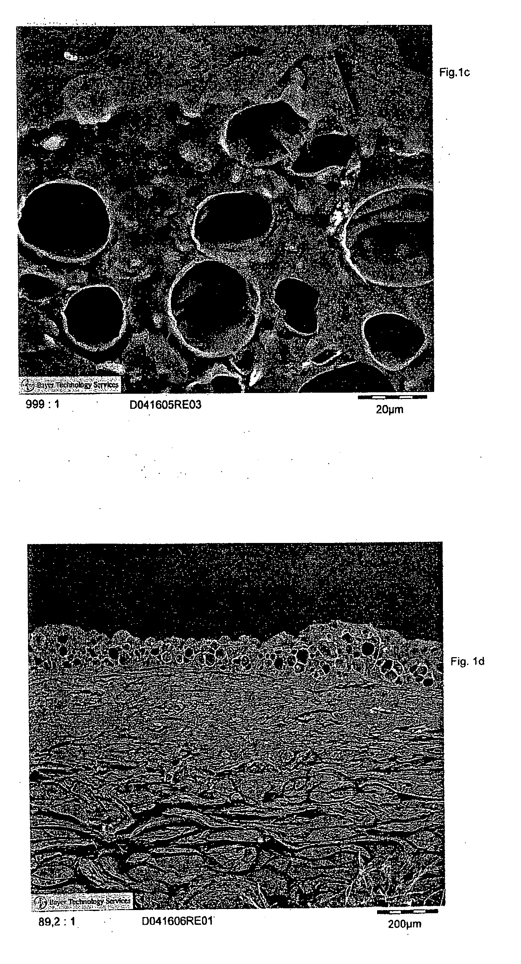

- **Fig 1c**: REM-Aufnahme des Leder-Querschnitts aus Beispiel 1, jedoch mit 90°C Präge- temperatur, Vergrößerung 999:1
- **Fig. 1d**: REM-Aufnahme des Leder-Querschnitts aus Beispiel 1, jedoch mit 130°C Präge- temperatur, Vergrößerung 89,2:1

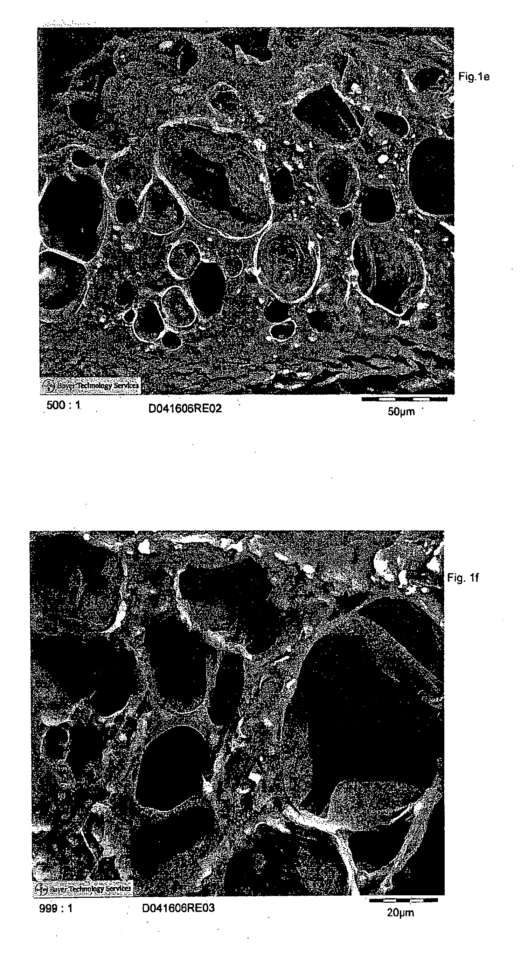

- **Fig. 1e**: REM-Aufnahme des Leder-Querschnitts aus Beispiel 1, jedoch mit 130°C Präge- temperatur, Vergrößerung 500:1
- **Fig. 1f**: REM-Aufnahme des Leder-Querschnitts aus Beispiel 1, jedoch mit 130°C Präge- temperatur, Vergrößerung 999:1

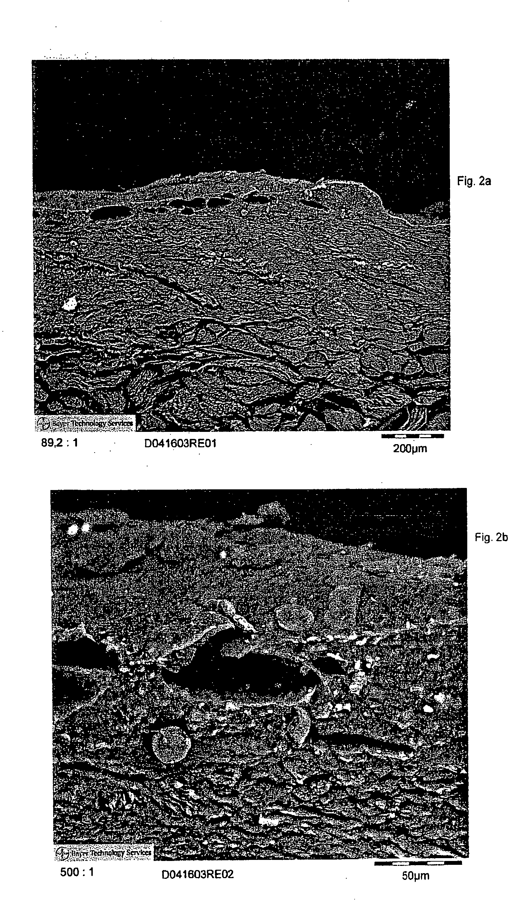

- **Fig. 2a**: REM-Aufnahme des Leder-Querschnitts aus Vergleichsbeispiel 1, jedoch mit 90°C Prägetemperatur, Vergrößerung 89,2:1
- **Fig 2b**: REM-Aufnahme des Leder-Querschnitts aus Vergleichsbeispiel 1, jedoch mit 90°C Prägetemperatur, Vergrößerung 500:1

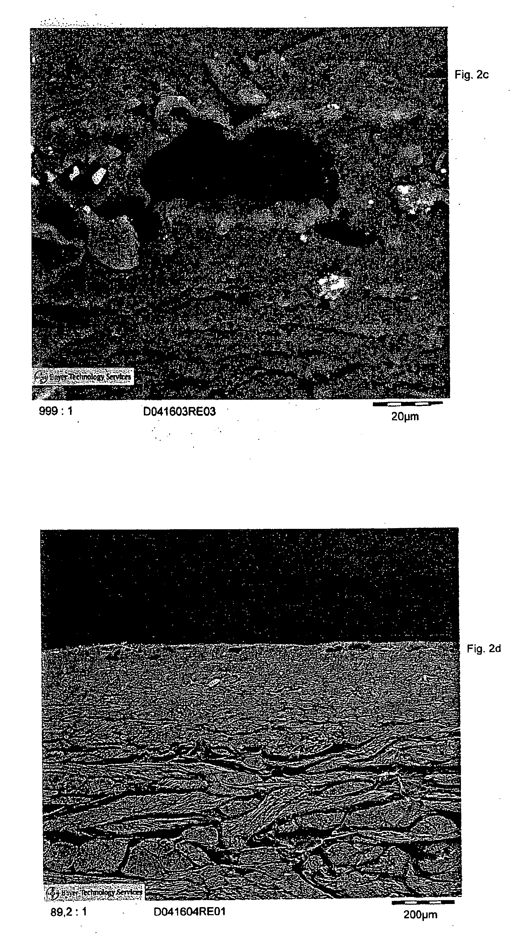

- **Fig. 2c**: REM-Aufnahme des Leder-Querschnitts aus Vergleichsbeispiel 1, jedoch mit 90°C Prägetemperatur, Vergrößerung 999:1
- **Fig. 2d**: REM-Aufnahme des Leder-Querschnitts aus Vergleichsbeispiel 1, jedoch mit 130°C Prägetemperatur, Vergrößerung 89,2:1

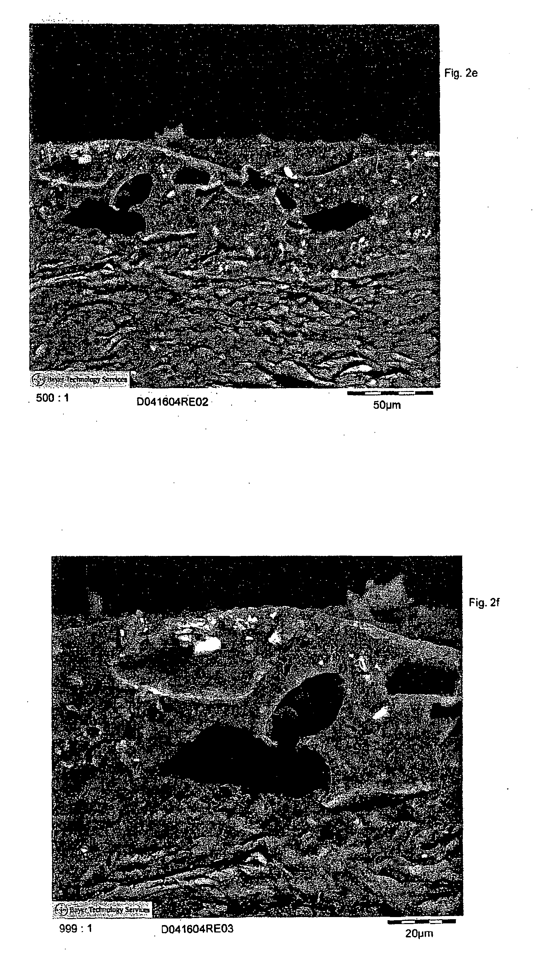

- **Fig.2e**: REM-Aufnahme des Leder-Querschnitts aus Vergleichsbeispiel 1, jedoch mit 130°C Prägetemperatur, Vergrößerung 500:1
- **Fig. 2f**: REM-Aufnahme des Leder-Querschnitts aus Vergleichsbeispiel 1, jedoch mit 130°C Prägetemperatur, Vergrößerung 999:1

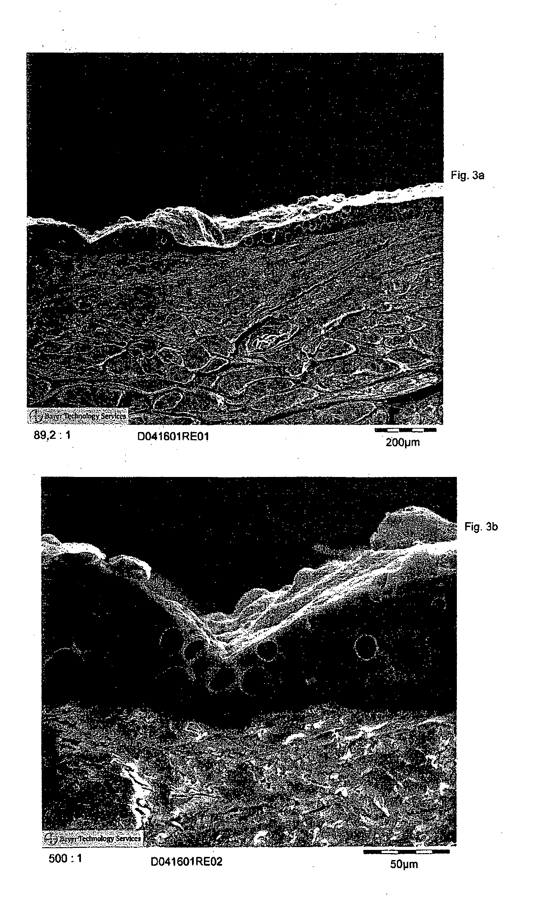

- **Fig. 3a**: REM-Aufnahme des Leder-Querschnitts aus Vergleichsbeispiel 2, jedoch mit 90°C Prägetemperatur, Vergrößerung 89,2:1
- **Fig. 3b**: REM-Aufnahme des Leder-Querschnitts aus Vergleichsbeispiel 2, jedoch mit 90°C Prägetemperatur, Vergrößerung 500:1

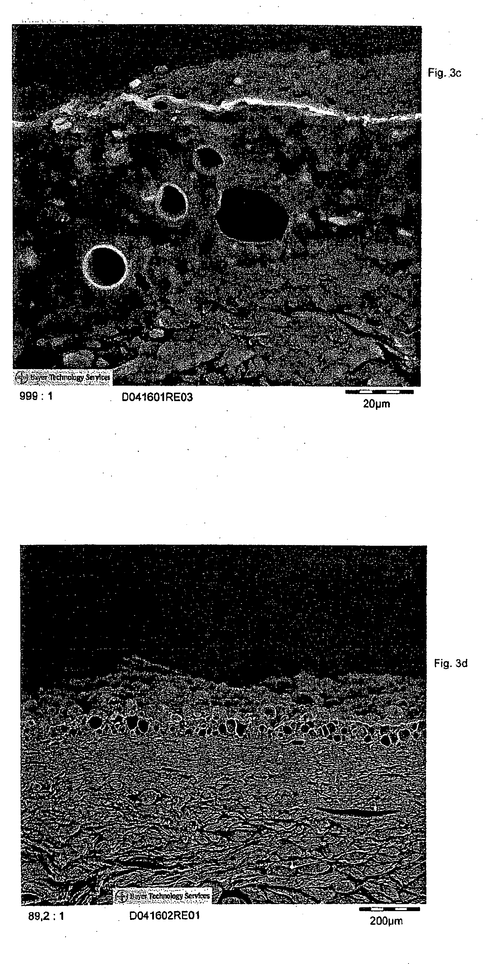

- **Fig. 3c**: REM-Aufnahme des Leder-Querschnitts aus Vergleichsbeispiel 2, jedoch mit 90°C Prägetemperatur, Vergrößerung 999:1
- **Fig 3d**: REM-Aufnahme des Leder-Querschnitts aus Vergleichsbeispiel 2, jedoch mit 130°C Prägetemperatur, Vergrößerung 89,2:1

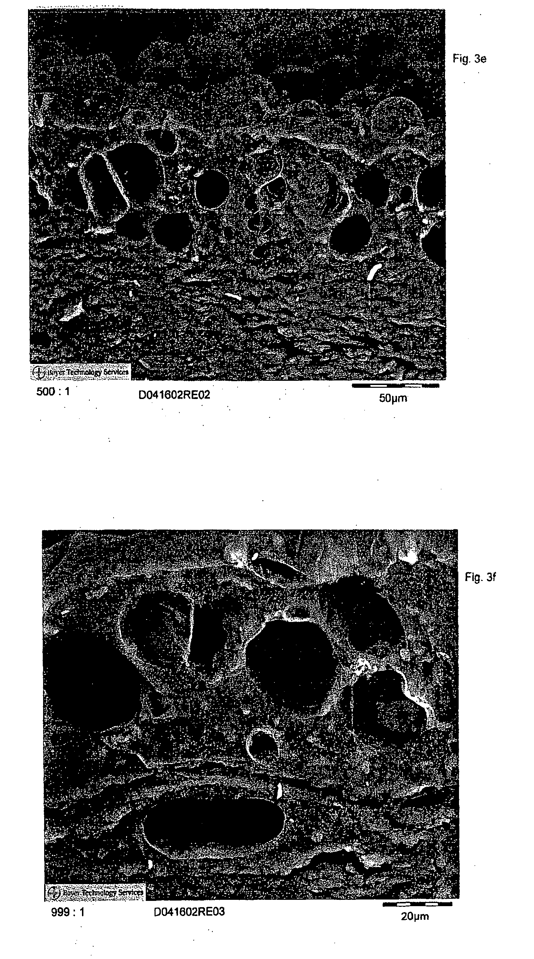

- **Fig 3e**: REM-Aufnahme des Leder-Querschnitts aus Vergleichsbeispiel 2, jedoch mit 130°C Prägetemperatur, Vergrößerung 500:1
- **Fig.3f**: REM-Aufnahme des Leder-Querschnitts aus Vergleichsbeispiel 2, jedoch mit 130°C Prägetemperatur, Vergrößerung 999:1

### Beispiele

Die aufgeführten Beispiele sollen die Erfindung erläutern, aber keineswegs einschränken. Die Prozentangaben der nachfolgenden Beispiele beziehen sich, sofern nicht anders angegeben, jeweils auf das Gewicht; Teile sind Gewichtsteile.

### Materialien / Rohstoffe

**In den Anwendungsbeispielen verwendete Hilfsmittel:**
- **Pigment:**: hochkonzentrierte, feinteilige emulgatorfreie Pigmentdispersion mit sehr geringem Bindemittelgehalt; wie **EUDERM^{®} Colors C-N;** 20-65 % je nach Pigment, LANXESS Deutschland GmbH
- **Füllmittel:**: anionische Dispersion; weiches Antiklebe- und Füllmittel für wässrige Bindergrundierungen wie **EUDERM^{®} Nappa Soft S;** ca. 25 Gew.-%, LANXESS Deutschland GmbH
- **PU-Binder 1:**: aliphatische anionische Polyurethan-Dispersion mittlerer Härte, wie **BAYDERM^{®} Grund DLV;** 40 Gew.-%; LANXESS Deutschland GmbH
- **PU-Binder 2:**: aromatisch-aliphatische anionische Polyurethan-Dispersion mittlerer Härte, zur Verbesserung der Trocken- und Naßhaftung und Prägbarkeit, wie **BAYDERM^{®} Grund 50 UD;** 40 Gew.-%; LANXESS Deutschland GmbH
- **Polyacrylat-Binder 1:**: Polyacrylat-Dispersion zur Verwendung in Topcoats wie **HYDRHOLAC^{®} CL-1;** ca. 37 Gew.-%, (Rohm and Haas)
- **Mattierung 1:**: Mattierungsmittel und Trockenstellmittel für Grundierungen; wie **EUDERM^{®} Mattierung SN 01**; Festgehalt ca. 23%; zur Verbesserung des Griffs, verhindert Bügel- und Stapelklebrigkeit; LANXESS Deutschland GmbH
- **Verdicker 1:**: hoch wirksamer, nichtionogener Verdicker zur Viskositätsregelung wässriger Zurichtansätze, wie Acrysol **RM-825**, Festgehalt 25 Gew.-%; (Rohm and Haas)
- **Verdicker 2:**: assoziativer Polyurethan-Verdicker wie Acrysol **RM-1020**, Festgehalt 20 Gew.-%; (Rohm and Haas)
- **Polyacrylat-Binder 2:**: anwendungsfertige Zubereitung von wässrigen Acrylat-Dispersionen mit Hilfsmitteln für einfache Grundierungsrezepturen für geschliffene Möbelleder, die vorwiegend nach dem Reverse-Coating - oder Spritzverfahren aufgetragen werden, wie **EUDERM Compact PM**, Festgehalt 25 Gew.-%
- **Schaummittel 1:**: anionisches Schaummittel mit mattierenden Bestandteilen, wie Lepton **Filler AF**; Festgehalt 20 Gew.-%, BASF
- **Schaummittel 2:**: **Stokal STA**, vorzugsweise in Kombination einsetzbar, Clariant
- **Schaummittel 3:**: **Stokal SR**, Clariant
- **Topcoat-Binder**: **BAYDERM Finish MT-N**, Polyurethan-Topcoat-Formulierung mit mattierenden Bestandteilen, Festgehalt ca, 25%, LANXESS Deutschland GmbH
- **Griffmittel:**: wässrige Silicon-Emulsion, Festgehalt ca. 59 Gew.-%, wie Additiv 2229 W, Rohm and Haas
- **Vernetzer:**: wasserdispergierbares Polyisocyanat mit einem NCO-Gehalt von 8,5 Gew.-%, ca. 50 %ige Lösung in Propylenglykoldiacetat, wie bei- spielsweise **AQUADERM XL 50**, LANXESS Deutschland GmbH
- **Verlaufshilfsmittel:**: Hilfsmittel auf Siliconbasis; 100 Gew.-%: AQUADERM Fluid H, LANXESS Deutschland GmbH
- **Mikrohohlkugeln:**: wässrige Formulierung, enthaltend nicht expandierte Mikrohohlkugeln vom Typ Expancel 642 WU 40 (Akzo) und eine Bindermischung auf Basis von Polyacrylat- und/oder Polyurethan-Dispersionen sowie übliche Additive: wie beispielsweise EUDERM X-Grade MP, EUDERM X- Grade FCF LANXESS Deutschland GmbH

### Beschreibung der allgenleinen Arbeitsweise bei der Zurrichtung:

### Herstellung der Crustleder für die nachstehend beschriebenen Zuricht-Beispiele

Wet-blue (hergestellt aus Rind als Rohmaterial; 4,5% Cr, bestimmt als Cr2O3) mit der Falzstärke 1,0-1,2 mm wird gewaschen, neutralisiert, nachgegerbt, gefärbt, gefettet, abschließend mit Ameisensäure abgesäuert und getrocknet.

| **Ledertyp:** **Rohmaterial:** **Einsatzmenge [%]** | Möbelleder schwarz 1 Hälfte Rind-wet blue mit der Falzstärke 1,2 mm **bezogen auf Falzgewicht** | | | | |
|---|---|---|---|---|---|
| | | | | | |
| | **%** | **Produkt** | | **Zeit min** | **Bemerkungen** |
| Waschen | 300 | Wasser 40°C | | | |
| | 0,2 | BAYMOL AN fl. *2 | (1:5) | | |
| | 0,3 | Ameisensäure 85 % | (1:10) | 20 | pH 3,3 / Flotte ab |
| Neutralisation 1 | 100 | Wasser 40°C | | | |
| | 3,0 | TANIGAN PAK-N fl. *3 | (1:2) | | |
| | 1,5 | Na-formiat | | 15 | |
| + | 1,0 | Na-bicarbonat | | 45 | pH 6,3 |
| Vorfettung + | 4,0 | Eureka 400-R *1 Fettmittel | (1:4) | 30 | |
| Softening 1 + | 3,0 | LEVOTAN L *4 | (1:4) | 30 | |
| Cr-Nachgerbung + | 4,0 | CHROMOSAL B-D *5 | | 90 | danach Fass auf Automatik über Nacht: 3 Min. bewegen pro 30 Min. Cyclus |
| Am nächsten | | | | | pH 4,65 |
| Morgen | | | | | |
| Neutralisation 2 + | 1,0 | TANIGAN PAK-N fl. *3 (1:2) | | 15 | |
| + | 0,6 | Na-bicarbonat | (1:10) | 30 | pH 5,8 / Flotte ab |
| Waschen | 300 | Wasser 30°C | | 10 | Flotte ab |
| Softening 2 | 80 | Wasser 30°C | | | |
| | 1,0 | Ammoniak 25% | (1:10) | 5 | |
| + | 3,0 | LEVOTAN L *4 | (1:4) | 30 | |
| Färbung | + 3,0 | BAYGENAL Schwarz TDR *6 | | 60 | Querschnitt auf Durchfärbung geprüft: o.k. / pH 7,3 |
| + | 100 | Wasser 50°C | | 5 | |
| + | 2,0 | Ameisensäure 85 % (1:10) | | 2x10 | |
| + | 1,7 | Ameisensäure 85 % | (1:10) | 2x20 | pH 3,6 / Flotte ab |
| Spülen | | Wasser 20°C | | 10 | Flotte ab |
| Leder auf Bock, ausrecken, nassspannen (Dampf 2h), Hängetrocknung, stollen , millen | | | | | |

| | | | | | |
|---|---|---|---|---|---|
| *1 EUREKA 400-R von Atlas Refinery, Newak / USA Allgemeine Umschreibung: sulfitiertes Fischöl 87 % *2 nicht ionisches Tensid *3 Neutralisationsgerbstoff *4 weichmachender Nachgerbstoff *5 Cr-Gerbstoffe *6 Farbstoff | | | | | |

### Applikation der Grundierung (base-coat):

Als Ausgangsmaterial diente das oben beschriebene Crustleder mit der Stärke 1,0 - 1,2 mm.

Vor dem Auftrag der Grundierung wird das im Vakuum getrocknete Leder klimatisiert, gestollt und im Falle von Ledern, die eine massive Beschädigung der Narbenseite aufweisen.

Mit einem Durchgang werden auf einer Revers-Druckmaschine mit Hilfe einer Rasterwalze 10 g/qfs die geschäumten Grundierflotte auf das Crustleder aufgebracht.

Das beschichtete Substrat wird nach dem Auftrag der Grundierung mit einer Transportgeschwindigkeit von 8-10 Meter/Minute durch einen Flachbandtrockner bewegt, der auf eine Temperatur von 85°C eingestellt war. Die Verweilzeit im Trockenkanal betrug ca. 3 Minuten. Die in der Praxis eingesetzten Tandemtrockner hatte eine Länge von 3 x 14 = 42 m.

Das grundierte Leder wurde anschließend auf einer Durchlaufprägemaschine vom Typ Rotopress geprägt (Temperatur: 110°C, Anpressdruck: 100-120 bar, Bandgeschwindigkeit: 7 Meter/Minute).

### Applikation des Topcoats:

Es wurden zunächst die Topcoat-Formulierungen gemäß nachstehender Tabelle durch Verrühren der Komponenten in der angegebenen Reihenfolge hergestellt und die Spritzviskosität durch Zugabe von Verdicker und Wasser eingestellt. Der Vernetzer wurde zum Schluss zugegeben. Die so erhaltenen Mischungen haben eine Topfzeit von ca. 4 Stunden und wurden sofort nach der Herstellung auf den entsprechend grundierten Crust gespritzt (2 Kreuze, Auftragsmenge nass: 2,0-2,5 g /sqft bzw. trocken: 0.6-0.7 g/sqft (Airless-Spritzpistole) und bei einer Temperatur von 100°C 2 Minuten getrocknet.

### Prüfungsbedingungen:

Die erhaltenen Leder wurden konditioniert, Prüflinge ausgestanzt, die nach folgenden Methoden bewertet wurden:

### a) Klebrigkeit

Zwei Lederstücke (6 cm x 4 cm) werden mit Narben auf Narben zusammengelegt und in der Mitte zusammengefaltet. Danach legt man die Probe auf eine Glasplatte, bedeckt man Probe zusätzlich mit einer Glasplatte und stellt ein

1 kg-Gewicht auf die gesamte Anordnung. Dann nimmt man die mit dem Gewicht versehene Probe und stellt sie für 1 Stunde in einen Umlufttrockenschrank, der bei einer Temperatur von 80°C gehalten wird.

Nach 1 Stunde holt man die Probe heraus und lässt 10 min ohne Gewicht abkühlen. Anschließend bestimmt man die Klebrigkeit, in dem man die zwei Endstücke von den Proben mit den Fingern auseinander zieht. Bestimmt wird, ob die Lederstücke sich einfach trennen lassen, ob sie sich weniger einfach trennen lassen oder ob sie sehr schwer trennbar sind.

### b) Knickbeständigkeit der Leder trocken/nass (Bally-Flexometer))

100000 Knickungen, trockene Lederprüflinge,

Es wurde visuell die Beschädigung nach dieser Anzahl von Knickungen bewertet.

20000 Knickungen, nasse Lederprüflinge. Es wurde visuell die Beschädigung nach dieser Anzahl von Knickungen bewertet.

### c) Nass-Reibechtheit (Veslic-Nassreibtester)

Lederprüflinge der Größe 20x10 mm wurden in den Nassreibtester eingespannt und ein Filz mit einer Auflage-Last von 50 N mit einer definierten Vorschub-Geschwindigkeit 500 mal über die Probe bewegt und nach Ende des Tests die Beschädigung der Zurichtschicht und die Anfarbung des Filzes visuell bewertet.

Bewertet wurden folgende Varianten:
trockenes Leder, trockener Filz,
trockenes Leder, nasser Filz (mit Wasser feucht gehalten),
nasses Leder, nasser Filz (mit Wasser feucht gehalten),
Leder trocken, Filz mit alkalischer Schweißlösung getränkt,
Leder trocken, Filz mit Benzin getränkt.

### d) Haftfestigkeit (Methode)

Die Prüflinge wurden mit der Fleischseite mittels Kontaktkleber (Loctite 454) auf eine starre Stahl-Unterlage aufgeklebt. Dann wurde ein selbstklebendes Tape auf die Zurichtung geklebt und 24 Stunden mit einem Auflagegewicht von 5 kg bei 20°C belastet. Danach wurde das Klebeband abgezogen und die Kraft gemessen, die zum Abreißen des Tapes erforderlich ist. Außerdem wird die Beschädigung der Zurichtung bewertet. Im Idealfall reißt die gesamte Zurichtung unter Beschädigung des Narbens ab, d.h. es wird die Reißfestigkeit des Leders in z-Richtung nahezu erreicht.

### e) Abriebfestigkeit (Taber)

Dieser Test wird gemäß DIN EN 14327 durchgeführt.

### f) Hitzevergilbung

Eine Lederprobe 2cm x 2cm wird aus einer Lederprobe von 5cm x 5cm ausgestanzt, damit dieser als Vergleich dient. Man legt die Lederprobe (2cm x 2cm) bei 120°C für 24 Std in einen Umlufttrockenschrank. Nach der Prüfung wird diese Probe mit der größeren Probe mit dem Graumaßstab beurteilt, um den Vergilbungsgrad zu bewerten.

### Beispiel 1 (erfindungsgemäßes Beispiel)

### Herstellung der Grundierflotte

Zur Herstellung der Grundierflotte werden zunächst folgende Ansätze A), B) und C) hergestellt:
Ansatz A) (Binder + Additive)
190 Teile PU-Binder 1
220 Teile PU-Binder 2
200 Teile Polyacrylat-Binder 1
150 Teile Füllmittel
70 Teile Mattierung 1
Ansatz B) (Mikrohohlkugeln)
1000 Teile Mikrohohlkugeln
Ansatz C) (Kompaktprodukt, enthaltend verschiedene Binder + Additive)
1000 Teile Polyacrylat-Binder 2
Die Herstellung der spritzfertigen Grundierflotte erfolgt nun in der Weise, dass man
60 Teile Pigment
450 Teile Ansatz A)
450 Teile Ansatz B) bei Raumtemperatur verrührt. Dann werden
40 Teile des Schaummittels 1 eingerührt.

Schließlich wird die Spritzviskosität so eingestellt, dass die Grundierung vor dem Verschäumen eine Durchlaufzeit von 45 Sekunden (gemessen im Fordbecher mit 6 mm Düse) aufweist. Üblicherweise werden dazu 2-15 Teile Verdicker 1 eingesetzt.

Unter Verwendung eines Schaumaggregats der Firma Ge-Ma-Ta wird durch Eindüsung von Luft in die so hergestellte Grundierflotte ein stabiler Schaum erzeugt, der eine Dichte von 0,6 kg/Liter besitzt.

Mit einem Durchgang werden auf einer Revers-Druckmaschine mit Hilfe einer Rasterwalze 10 g/qfs dieser geschäumten Grundierflotte auf das oben beschriebene Crustleder aufgebracht.

Das beschichtete Substrat wird nach dem Auftrag der Grundierung mit einer Transportgeschwindigkeit von 8-10 Meter/Minute durch einen Flachbandtrockner bewegt, der auf eine Temperatur von 85°C eingestellt war. Die Verweilzeit im Trockenkanal betrug ca. 3 Minuten.

Das grundierte Leder wurde anschließend auf einer Durchlaufprägemaschine vom Typ Rotopress geprägt (Temperatur: 110°C, Anpressdruck: 100-120 bar, Bandgeschwindigkeit: 7 Meter/Minute).

### Applikation des Topcoats

Auf das so geprägte Leder wird als Finish eine Topcoat-Spritzflotte bestehend aus:
900 Teilen Topcoat-Binder
20 Teilen Griffmittel und
80 Teilen Vernetzer und
0,5-10 Teilen Verdicker 1
(die genaue Verdickermenge wird im Versuch so eingestellt, dass die Spritzflotte im Ford-Becher bei Düse 4 mm eine Durchlaufzeit von 22 Sekunden aufweist) mittels Airless-Spritzpistole in einem Auftrag bei einer Auftragsmenge von 2,2 g/ft² (nass) aufgetragen. Der Vernetzer wurde als letzte Komponente zugegeben.

Nach dem Spritzauftrag wird das Leder wie oben beschrieben im Flachbandtrockner getrocknet.

### Vergleichsbeispiel V1 (Schaum ohne Mikrokapseln)

Beispiel 1 wurde mit dem gleichen Crustleder wiederholt, wobei die spritzfertige Grundierflotte nun wie folgt hergestellt wurde:
60 Teile Pigment
450 Teile Ansatz A)
450 Teile Ansatz C) werden bei Raumtemperatur verrührt. Dann werden
40 Teile des Schaummittels 1 eingerührt.

Schließlich wird die Spritzviskosität so eingestellt, dass die Grundierung vor dem Verschäumen eine Durchlaufzeit von 45 Sekunden (gemessen im Fordbecher mit 6 mm Düse) aufweist. Üblicherweise werden dazu 2-15 Teile Verdicker 1 eingesetzt.

Die übrigen Bedingungen und die Topcoat-Applikation wurden analog Beispiel 1 beibehalten.

### Vergleichsbeispiel V2 (nicht geschäumter Binder, mit Mikrohohlkugeln)

Beispiel 1 wurde mit dem gleichen Crustleder wiederholt, wobei die spritzfertige Grundierflotte nun wie folgt hergestellt wurde:
60 Teile EUDERM Schwarz C-N (Pigment)
450 Teile Ansatz A) (Zusammensetzung dieser Mischung ist oben beschrieben)
450 Teile Ansatz B) werden bei Raumtemperatur verrührt.

Schließlich wird die Spritzviskosität so eingestellt, dass die Grundierung eine Durchlaufzeit von 45 Sekunden (gemessen im Fordbecher mit 6 mm Düse) aufweist. Üblicherweise werden dazu 2-15 Teile Verdicker eingesetzt.

Die übrigen Bedingungen und die Topcoat-Applikation wurden analog Beispiel 1 beibehalten.

### Beispiel 2

Beispiel 1 wurde wiederholt, jedoch erfolgte die Applikation der Grundierung mittels einer Airless-Spritzauftrags. Die Auftragsmengen wurden beibehalten. Die übrigen Bedingungen und die Topcoat-Applikation wurden analog Beispiel 1 beibehalten

### Beispiel 3

Beispiel 1 wurde wiederholt, jedoch erfolgte die Applikation der Grundierung mittels eines HVLP (high volume low pressure) Spritzauftrags. Die Auftragsmengen wurden beibehalten. Die übrigen Bedingungen und die Topcoat-Applikation wurden analog Beispiel 1 beibehalten.

Die erfindungsgemäßen Leder gemäß den Beispielen 1, 2 und 3 erfüllten alle Echtheitsanforderungen nach den Untersuchungsmethoden, die oben aufgeführt wurden.

Die erfindungsgemäßen Leder zeigen einen wesentlich weicheren angenehmeren Griff als die Leder gemäß den Vergleichsbeispielen V1 und V2 und zeigen eine deutlich geringere Vergilbung der Oberfläche. Ihr Aspekt ist wesentlich eleganter als bei Ledern mit reiner Schaumzurichtung gemäß Vergleichsbeispiel V1.

Die erfindungsgemäßen Leder zeigen darüber hinaus keine Vergrauung der Zurichtschicht, während das Leder gemäß Vergleichsbeispiel V2 eine rauhere unruhige Oberfläche aufweist und einem dem pull-up-Effekt ähnliches Verhalten (erkennbar an einer Vergrauung unter Zugbeanspruchung) zeigt.

Die erfindungsgemäßen Leder gemäß den Beispielen 1, 2 und 3 weisen darüber hinaus eine absolut gleichmäßige Oberfläche auf. Auch größere Narbenfehler des Crustleder werden überraschenderweise auch ohne vorherige Stuckierung durch die Kombination von Schaum mit Mikrohohlkugelon in der Grundierschicht perfekt kaschiert.

Der Prägestand (print retention) ist nach der Applikation der Topcoats hervorragend.

Die Mikrohohlkugeln enthaltende geschäumte Grundierung lässt sich nach der Trocknung ausgezeichnet prägen und zeigt eine dem Stand der Technik gegenüber deutlich verminderte Vergilbung. Die Prägebild ist ausgezeichnet und sehr natürlich, man beobachtet unter den üblichen Prägebedingungen kein Durchschneiden bei Prägen (cut through resistance).

## Patentansprüche

1. Zugerichtetes mit einer Grundierung versehenes flächiges Substrat, wobei das flächige Substrat Leder oder Kunstleder, insbesondere ein mit einer Grundierung versehenes gegebenenfalls Narbenfehler aufweisendes Vollnarbenleder, Spaltleder oder ein Kunstleder ist, wobei die Oberfläche der Zurichtung mit einem vorzugsweise matten Oberflächenfinish versehen ist, **dadurch gekennzeichnet, dass** die Grundierung der Zurichtung durch mindestens eine verfestigte Polymer-Dispersion mit einer Schaumstruktur gebildet ist, in welche zusätzliche Mikrohohlkugeln eingebettet sind, deren Hülle vorzugsweise eine Wandstärke von weniger als 2 µm aufweist, enthält und der vorzugsweise matte Oberflächenfinish mindestens eine verfestigte und vernetzte Polymerdispersion enthält, mit der Maßgabe, dass der mittlere Durchmesser der Hohlräume der Schaumstruktur der Grundierung kleiner ist als der mittlere Durchmesser der Hohlräume, die durch die expandierten Mikrohohlkugeln gebildet werden.

2. Verfahren zur Herstellung des zugerichteten Substrates nach Anspruch 1, das **dadurch gekennzeichnet ist, dass** man
- eine aufgeschäumte Grundierung, enthaltend wenigstens eine verfestigbare Polymer-Dispersion (Binder), Schaummittel, Wasser und Mikrohohlkugeln auf ein flächiges Substrat, das Leder, insbesondere Spaltleder oder Kunstleder ist, aufträgt, wobei die geschäumte Grundierung eine Dichte von 0,3-0,9 g/l aufweist,
- das beschichtete Substrat trocknet,
- gegebenenfalls auf das getrocknete Substrat auf der beschichteten Seite ein Muster prägt und
- auf die gegebenenfalls geprägte Oberfläche ein Oberflächenfinish (Topcoat), enthaltend wenigstens eine verfestigbare Polymerdispersion aufträgt und das zugerichtete Substrat trocknet.

3. Verfahren gemäß Anspruch 2, **dadurch gekennzeichnet, dass** als verfestigbare PolymerDispersionen der Grundierung solche aus der Gruppe der Polyacrylate, Polybutadien-Copolymere und/oder der Polyurethane eingesetzt werden.

4. Verfahren gemäß Anspruch 2, **dadurch gekennzeichnet, dass** die Mikrohohlkugeln der Grundierung im nicht expandierten Zustand eine mittlere Teilchengröße von 2-45 µm aufweisen.

5. Grundierungsformulierung, enthaltend
1 bis 30 %, bevorzugt 4 bis 25 %, besonders bevorzugt 10 bis 20 % Binder,
0,1 bis 4 % Schaummittel
0,1 bis 2 % Mikrohohlkugeln
0,01 bis 10% Pigment
0,1 bis 30 Füllmittel
0 bis 0,2 % Verlaufshilfsmittel
0 bis 0,2 % Verdicker
0 bis 0,2 % Vernetzer
0 bis 0,7 % Mattierungsmittel
und Wasser, wobei die Summe aller Komponenten stets 100 % ergibt.

6. Verwendung von zugerichtetem Leder gemäß Anspruch 1 als Automobilleder, Polstermöbel und Schuhobermaterial.

## Claims

1. Finished sheet-like substrate provided with a bottoming coat, the sheet-like substrate being leather or imitation leather, in particular a full-grain leather optionally having grain defects and provided with a bottoming coat or a split leather or an imitation leather, the surface of the finish being provided with a preferably matt surface finish, **characterized in that** the bottoming coat of the finish is formed by at least one solidified polymer dispersion having a foam structure in which additional hollow microspheres, the shell of which preferably has a wall thickness of less than 2 µm, are embedded, and the preferably matt surface finish contains at least one solidified and crosslinked polymer dispersion, with the proviso that the mean diameter of the cavities of the foam structure of the bottoming coat is less than the mean diameter of the cavities which are formed by the expanded hollow microspheres.

2. Process for the production of the coated substrate according to Claim 1, which is **characterized in that**
- a foamed bottoming containing at least one solidifiable polymer dispersion (binder), foaming agents, water and hollow microspheres is applied to a sheet-like substrate, which is leather, in particular split leather or imitation leather, the foamed bottoming having a density of 0.3-0.9 g/l,
- the coated substrate is dried,
- optionally a pattern is embossed on the coated side of the dried substrate and
- a surface finish (topcoat) containing at least one solidifiable polymer dispersion is applied to the optionally embossed surface and the coated substrate is dried.

3. Process according to Claim 2, **characterized in that** the solidifiable polymer dispersions of the bottoming coat from the group consisting of the polyacrylates, polybutadiene copolymers and/or the polyurethanes are used as such polymer dispersions.

4. Process according to Claim 2, **characterized in that** the hollow microspheres of the bottoming coat have a mean particle size of 2-45 µm in the unexpanded state.

5. Bottoming formulation, containing
1 to 30%, preferably 4 to 25%, particularly preferably 10 to 20%, of binder
0.1 to 4% of foaming agent
0.1 to 2% of hollow microspheres
0.01 to 10% of pigment
0.1 to 30% of filler
0 to 0.2% of levelling agent
0 to 0.2% of thickener
0 to 0.2% of crosslinking agent
0 to 0.7% of flatting agent
and water, the sum of all components always being 100%.

6. Use of finished leather according to Claim 1 as automobile leather, upholstered furniture and shoe upper material.

## Revendications

1. Substrat plat corroyé muni d'une couche de base, le substrat plat étant du cuir ou du cuir artificiel, notamment un cuir pleine fleur, une croûte de cuir ou un cuir artificiel muni d'une couche de base comportant éventuellement un défaut de grain, la surface du corroyage étant munie d'un fini de surface de préférence mat, **caractérisé en ce que** la couche de base du corroyage est formée par au moins une dispersion polymère solidifiée ayant une structure de mousse, dans laquelle des microbilles creuses supplémentaires sont incorporées, dont l'enveloppe présente de préférence une épaisseur de paroi inférieure à 2 µm, et le fini de surface de préférence mat contient au moins une dispersion polymère solidifiée et réticulée, à condition que le diamètre moyen des cavités de la structure de mousse de la couche de base soit inférieur au diamètre moyen des cavités formées par les microbilles creuses expansées.

2. Procédé de fabrication du substrat corroyé selon la revendication 1, **caractérisé en ce que**
- une couche de base moussée, contenant au moins une dispersion polymère durcissable (liant), un agent moussant, de l'eau et des microbilles creuses est appliquée sur un substrat plan, qui est du cuir, notamment une croûte de cuir ou un cuir artificiel, la couche de base moussée présentant une densité de 0,3 à 0,9 g/l,
- le substrat revêtu est séché,
- un motif est éventuellement marqué sur le substrat séché du côté revêtu et
- un fini de surface (couche supérieure), contenant au moins une dispersion polymère durcissable, est appliqué sur la surface éventuellement marquée et le substrat corroyé est séché.

3. Procédé selon la revendication 2, **caractérisé en ce qu'**en tant que dispersions polymères durcissables de la couche de base, celles du groupe des polyacrylates, copolymères de polybutadiène et/ou polyuréthannes sont utilisées.

4. Procédé selon la revendication 2, **caractérisé en ce que** les microbilles creuses de la couche de base présentent à l'état non expansé une taille de particule moyenne de 2 à 45 µm.

5. Formulation de couche de base, contenant 1 à 30 % de préférence 4 à 25 %, de manière particulièrement préférée 10 à 20 %, de liant,
0,1 à 4 % d'agent moussant,
0,1 à 2 % de microbilles creuses,
0,01 à 10 % de pigment,
0,1 à 30 de charge,
0 à 0,2 % d'adjuvant d'écoulement,
0 à 0,2 % d'épaississant,
0 à 0,2 % d'agent de réticulation,
0 à 0,7 % d'agent matifiant,
et de l'eau, la somme de tous les composants étant toujours de 100 %.

6. Utilisation de cuir corroyé selon la revendication 1 en tant que cuir automobile, meubles rembourrés et matériau de dessus de chaussures.
